# DEMANDE DE BREVET EUROPEEN

(11) **EP 1 909 002 A1**
(43) Date de publication de la demande: **09.04.2008**
(21) Numéro de dépôt: 07117421.3
(22) Date de dépôt: 27.09.2007
(51) Int. Cl.: F16J 15/32, F02F 11/00

(54) **Dispositif de joint d'étanchéité dynamique pour arbre rotatif**

(30) Priorité: 02.10.2006 FR 0608627
(71) Demandeur: HUTCHINSON, 75008 Paris (FR)
(72) Inventeur: Fayaud, Patrick, 49000 Angers (FR)
(74) Mandataire: Cabinet Plasseraud

(57) **Abrégé**

Le dispositif comprend une bride extérieure (11) destinée à être montée sur un carter (3) et sur laquelle est surmoulé un cordon d'étanchéité statique (20) en matière élastomère pour assurer l'étanchéité entre la bride et le carter, la matière élastomère s'étendant depuis le cordon d'étanchéité statique (20) jusqu'à une armature intérieure (10) sensiblement circulaire pour constituer une liaison étanche (5) entre la bride extérieure (11) et cette armature. Cette liaison étanche (5) en matière élastomère comporte au moins une portion annulaire (5A ; 52) élastiquement déformable et libre de mouvement pour permettre un débattement radial et axial de l'armature par rapport à la bride.

## Description

La présente invention se rapporte à un dispositif de joint d'étanchéité dynamique pour arbre rotatif, en particulier pour arbre rotatif d'un moteur thermique comportant un carter d'huile, comprenant une bride extérieure destinée à être montée sur un carter et sur laquelle est prévu un cordon d'étanchéité statique en matière élastomère pour assurer l'étanchéité entre la bride et le carter, de la matière élastomère étant moulée sur ladite bride extérieure et s'étendant jusqu'à une armature intérieure sensiblement circulaire pour constituer une liaison étanche entre la bride extérieure et cette armature, ladite armature étant surmoulée au moins en partie par la matière élastomère et supportant une lèvre d'étanchéité dynamique destinée à venir en contact avec l'arbre.

Un dispositif de joint d'étanchéité dynamique de ce type est connu du document de brevet EP 0 615 084 A1. La bride extérieure de ce dispositif présente une paroi sensiblement tronconique prolongée vers l'intérieur par une portée radiale contre laquelle est accolée une armature intérieure annulaire.

Le matériau élastomère utilisé pour mouler le cordon d'étanchéité statique sur la bride extérieure est prolongé radialement vers l'intérieur pour recouvrir par moulage la paroi intérieure de la bride. Lors de l'opération de moulage, l'armature intérieure est maintenue accolée contre la face de la portée radiale de la bride extérieure qui est orientée vers le milieu à étanchéifier. Ainsi, l'élastomère vient surmouler en partie l'armature intérieure et la maintient en contact avec la bride extérieure.

Ce dispositif présente l'avantage de pouvoir utiliser une même bride extérieure surmoulée par de l'élastomère pour des joints d'étanchéité s'appliquant à des arbres de différents diamètres. En effet, seul l'ensemble formé par l'armature intérieure et la lèvre d'étanchéité doit être modifié pour répondre à un changement de diamètre d'arbre, à la condition bien sûr d'avoir des carters de même géométrie adaptée à une même bride extérieure.

Néanmoins, ce dispositif présente certains inconvénients. En particulier, l'armature intérieure et la bride extérieure sont solidaires en mouvement, puisque l'armature est maintenue accolée contre la portée radiale de la bride. De ce fait, les défauts d'excentricité de l'arbre sont compensés uniquement par la flexibilité de la lèvre en élastomère. En outre, il s'avère que des phénomènes de résonance vibratoire affectent généralement l'arbre, ce qui entraîne des débattements respectivement axial et radial de l'arbre à des fréquences relativement élevées. La flexibilité de la lèvre en élastomère est parfois insuffisante pour compenser le débattement de l'arbre en résonance vibratoire dans la direction axiale, et peut aussi être insuffisante pour compenser le débattement de l'arbre en résonance vibratoire dans la direction radiale. Le même problème se pose si la lèvre en élastomère est remplacée par une lèvre en PTFE montée sur un support en élastomère adhéré à l'armature.

Cette compensation insuffisante provoque notamment des déplacements axiaux à fréquences élevées entre l'arbre et la surface d'étanchéité de la lèvre, ce qui entraîne localement des pertes momentanées de pression de contact radial entre la surface d'étanchéité de la lèvre et l'arbre. Des jeux de contact dynamique appelés micro jeux apparaissent ainsi, qui bien que très petits ont pour conséquence de créer des ouvertures qui compromettent l'étanchéité dynamique de la lèvre en laissant fuir de petites quantités d'huile.

L'invention a pour but de supprimer ces inconvénients, en proposant un dispositif de joint d'étanchéité dynamique qui permette d'améliorer l'efficacité de la lèvre d'étanchéité dynamique.

A cet effet, l'invention a pour objet un dispositif de joint d'étanchéité dynamique tel que défini en introduction, caractérisé en ce que ladite liaison étanche en matière élastomère comporte au moins une portion annulaire libre de mouvement pour permettre un débattement radial et axial de l'armature par rapport à la bride.

Ainsi, il y a toujours une membrane en matière élastomère, ou une couche de matière élastomère, pour former ladite portion annulaire entre la bride extérieure fixée au carter et l'armature qui supporte la lèvre d'étanchéité dynamique. La souplesse de la membrane, ou encore l'épaisseur suffisante de matière élastomère qui assure la souplesse de la couche, permet la liberté de mouvement de ladite portion annulaire, ce qui autorise un débattement radial et axial de l'armature par rapport à la bride. En fonctionnement, la lèvre d'étanchéité dynamique est libre d'accompagner les déplacements vibratoires de l'arbre, puisque l'armature qui supporte la lèvre est libre de se déplacer avec la lèvre en ayant un débattement suffisant aussi bien dans la direction axiale que radiale. Les déplacements axiaux relatifs entre l'arbre et la surface d'étanchéité de la lèvre, ainsi que les éventuelles pertes locales de pression de contact radial entre la surface d'étanchéité de la lèvre et l'arbre, sont évités en fonctionnement contrairement à un dispositif classique tel que celui décrit dans EP 0 615 084 A1 où l'armature est immobilisée par la bride extérieure et limite donc fortement les déplacements axial et radial de la lèvre d'étanchéité.

Les jeux de contact dynamique (micro jeux) sont ainsi évités, ou tout au moins grandement atténués, améliorant ainsi substantiellement l'efficacité de la lèvre d'étanchéité dynamique pour limiter fortement voire empêcher les éventuelles fuites d'huile à l'interface arbre-lèvre en fonctionnement du moteur.

Par ailleurs, l'invention vise aussi à permettre une économie de métal et une réduction de poids significatives par rapport aux dispositifs de joints d'étanchéité existants, en particulier en ce qui concerne les dispositifs prévus pour des grands diamètres d'ouverture de carters moteurs. Le fait que dans un dispositif de joint d'étanchéité selon l'invention, la liaison étanche en matière élastomère comporte au moins une portion annulaire libre de mouvement, permet de concevoir des dispositifs de joints à bride extérieure de grand diamètre avec une proportion relativement importante de paroi d'étanchéité formée par une membrane souple en élastomère. La réduction du coût réalisée en utilisant des parois d'étanchéité non métalliques peut être relativement importante par rapport aux solutions classiques, en particulier dans une conjoncture où le prix du métal est élevé.

Dans des modes de réalisation préférés d'un dispositif de joint d'étanchéité selon l'invention, on a recours notamment aux dispositions suivantes prises isolément ou en combinaison :
- le cordon d'étanchéité statique est moulé sur la bride extérieure, et la matière élastomère du cordon est la même que celle constituant ladite liaison étanche ;
- une couche de matière élastomère est disposée sur la face de la bride extérieure opposée au milieu à étanchéifier, plusieurs trous étant prévus dans ladite bride pour établir des zones de passage de matière élastomère reliant ladite couche au cordon d'étanchéité statique ;
- l'armature intérieure présente un diamètre extérieur qui est inférieur au diamètre intérieur de la bride extérieure ;
- la portion annulaire de ladite liaison étanche forme une membrane qui s'étend essentiellement dans un plan perpendiculaire à l'axe du dispositif ;
- la bride extérieure présente une première portée radiale et l'armature intérieure présente une seconde portée radiale axialement décalée en direction de l'ambiance extérieure, la portion annulaire de ladite liaison étanche reliant élastiquement les deux portées radiales ;
- la bride extérieure présente une première portée radiale et l'armature intérieure présente une seconde portée radiale disposée sensiblement au même niveau axial que la première portée radiale et radialement séparée de celle ci d'une certaine distance, et ladite portion annulaire formant une membrane relie élastiquement les deux portées radiales ;
- la portée radiale de l'armature intérieure présente une face orientée en direction du milieu à étanchéifier qui est entièrement surmoulée par la matière élastomère, la matière élastomère étant prolongée radialement en direction de l'arbre pour former la lèvre d'étanchéité dynamique ;
- la bride extérieure est essentiellement formée par une plaque métallique ;
- la bride extérieure comprend une première plaque présentant une ouverture intérieure et un côté droit, ladite première plaque comprenant des premiers trous pour le passage d'éléments de fixation tels que des boulons, la bride extérieure comprenant en outre une seconde plaque de forme allongée qui comprend des seconds trous pour le passage d'éléments de fixation, cette seconde plaque étant disposée le long du côté droit de la première plaque en formant avec cette première plaque un angle sensiblement égal à 90°, une portion du cordon d'étanchéité statique étant moulée sur ladite seconde plaque ;
- la seconde plaque est reliée à la première plaque uniquement par de la matière élastomère ;
- la première plaque forme une collerette ouverte, le côté droit de la première plaque comportant deux portions sensiblement symétriques à bords rectilignes alignés séparées par une ouverture latérale ;
- la bride extérieure comprend plusieurs trous comportant chacun un insert pour le passage d'un boulon de fixation de ladite bride au carter, le cordon d'étanchéité statique prévu sur la bride étant localement dédoublé pour encercler chaque insert, de la matière élastomère étant moulée entre la bride et une surface périphérique d'un insert de façon à maintenir l'insert fixé à la bride.

D'autres caractéristiques et avantages ressortent de la description qui suit d'exemples non limitatifs de modes de réalisation, en référence aux figures dans lesquelles :
La figure 1 représente schématiquement une vue partielle en coupe radiale longitudinale d'un premier mode de réalisation d'un dispositif de joint d'étanchéité selon l'invention installé sur une paroi d'un carter traversé par un arbre moteur.
La figure 2 représente schématiquement une vue partielle en coupe radiale longitudinale d'un second mode de réalisation d'un dispositif de joint d'étanchéité selon l'invention.
La figure 3 représente schématiquement une vue partielle en coupe radiale longitudinale d'un troisième mode de réalisation d'un dispositif de joint d'étanchéité selon l'invention.
La figure 4 représente schématiquement une vue partielle en coupe radiale longitudinale d'un quatrième mode de réalisation d'un dispositif de joint d'étanchéité selon l'invention.
La figure 5 représente schématiquement une vue de face d'un dispositif de joint d'étanchéité selon l'invention dans un mode de réalisation adapté pour un carter présentant plusieurs plans géométriques.
La figure 6 représente une vue partielle en perspective du dispositif de joint d'étanchéité selon le mode de réalisation représenté sur la figure 5.
La figure 7 représente une vue partielle en coupe du dispositif de joint d'étanchéité dans le mode de réalisation représenté sur les figures 5 et 6, selon un plan passant par la ligne VII-VII représentée sur la figure 6.
La figure 8 représente une vue partielle en coupe du dispositif de joint d'étanchéité dans le mode de réalisation représenté sur les figures 5 et 6, selon un plan passant par la ligne VIII-VIII représentée sur la figure 6.
La figure 9 représente une vue partielle en perspective des première et seconde plaques utilisées pour réaliser la bride extérieure d'un dispositif de joint d'étanchéité selon un mode de réalisation de l'invention.
La figure 10 représente une vue partielle en perspective d'un dispositif de joint d'étanchéité selon l'invention dans un mode de réalisation alternatif à celui représenté sur les figures 5 et 6.
La figure 11 représente schématiquement une vue partielle en coupe radiale longitudinale d'un cinquième mode de réalisation d'un dispositif de joint d'étanchéité selon l'invention.

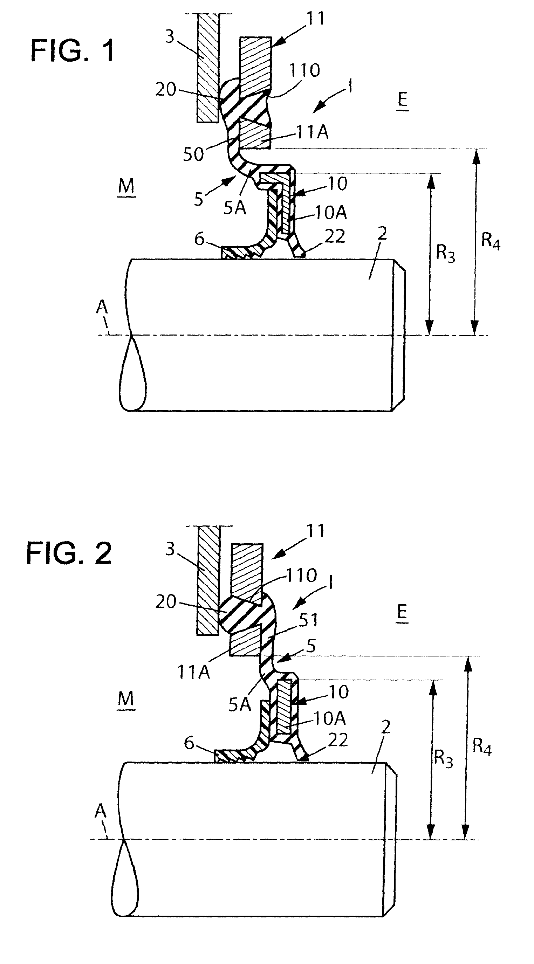

Sur la figure 1, un premier mode de réalisation du dispositif de joint d'étanchéité selon l'invention est représenté partiellement vu en coupe selon un plan passant par l'axe longitudinal de l'arbre moteur 2. Le carter 3 renferme un milieu M à étanchéifier, généralement de l'huile, et présente une ouverture traversée par l'arbre 2. Le dispositif de joint d'étanchéité comprend une bride extérieure 11 sensiblement plane montée au niveau de l'ouverture du carter 3 et fixée au carter par des moyens de fixation tels que des boulons non représentés, cette bride 11 présentant une ouverture intérieure sensiblement circulaire. On définit comme axe de symétrie du dispositif l'axe A perpendiculaire au plan de la bride et passant par le centre de ladite ouverture intérieure. Une fois le dispositif monté sur le carter, son axe de symétrie A coïncide au moins approximativement avec l'axe de l'arbre moteur 2.

Un cordon d'étanchéité statique 20 en matière élastomère est surmoulé sur la face de la bride 11 en vis-à-vis du carter pour assurer l'étanchéité entre la bride et le carter. Préférablement, la bride 11 comprend une portée radiale 11A, et les moyens de fixation de la bride au carter sont prévus pour comprimer au montage le cordon d'étanchéité statique 20 en rapprochant axialement ladite portée radiale 11A de la paroi du carter 3 qui reçoit lesdits moyens de fixation. Avantageusement, plusieurs trous 110 sont prévus dans la bride 11 pour permettre un ancrage mécanique du cordon d'étanchéité statique 20. Le dispositif comprend en outre une armature intérieure 10 sensiblement circulaire sous la forme d'une seconde bride de moindre diamètre que la bride extérieure 11 et centrée sur l'axe A du dispositif. De façon classique, cette armature supporte une lèvre d'étanchéité dynamique 6 venant en contact avec l'arbre 2. La bride et/ou l'armature peuvent être en métal ou alternativement en un matériau plastique relativement dur.

L'armature intérieure 10 est reliée à la bride extérieure 11 par une liaison étanche 5 en matière élastomère. En effet, la matière élastomère du cordon d'étanchéité statique 20 se prolonge radialement vers l'intérieur par une couche 50 surmoulant la portée radiale 11A de la bride 11 préférablement avec adhérence, puis se prolonge encore par une membrane souple 5A formant au moins en partie la liaison étanche 5, et vient surmouler au moins en partie l'armature 10. La membrane souple 5A constitue une portion annulaire de la liaison étanche 5, élastiquement déformable et libre de mouvement pour permettre un débattement radial et axial de l'armature 10 par rapport à la bride 11.

De manière générale, la portion annulaire élastiquement déformable et libre de mouvement de la liaison étanche 5 est prévue éloignée radialement et/ou axialement du cordon d'étanchéité statique 20, de façon à ce que la compression de la zone d'élastomère formant ledit cordon n'affecte pas la liberté de mouvement de ladite portion annulaire. D'autre part, il est entendu que le matériau élastomère peut être un caoutchouc naturel ou synthétique, ou encore un thermoplastique élastomère (TPE). Par ailleurs, l'épaisseur de la membrane souple 5A n'est pas nécessairement uniforme : par exemple, des nervures de renfort peuvent être moulées avec la membrane.

La matière élastomère est prolongée radialement vers l'intérieur pour former une lèvre anti-poussière 22 entre l'armature 10 et la surface extérieure de l'arbre. La lèvre d'étanchéité dynamique 6 est réalisée par exemple en PTFE et est adhérée sur la matière élastomère qui recouvre l'armature 10.

L'armature 10 présente une portée radiale 10A axialement décalée par rapport à la portée radiale 11A de la bride 11 en direction de l'ambiance extérieure E. L'armature 10 présente en outre une petite portée longitudinale 10B formant une équerre avec la portée radiale 11A, que vient surmouler la membrane souple constituée par la liaison étanche 5 en matière élastomère. Avec cette disposition, la membrane 5 présente une certaine extension longitudinale, ce qui favorise la souplesse dans la direction radiale et permet un certain débattement radial de l'armature 10 par rapport à la bride 11. Pour autoriser un tel débattement radial de l'armature 10, cette dernière présente un diamètre extérieur R3 qui est inférieur au diamètre intérieur R4 de la bride extérieure 11. Le débattement radial permet un centrage permanent de l'armature 10 et de la lèvre d'étanchéité dynamique 6 en cas de défauts d'excentricité de l'arbre, et notamment lors de phénomènes vibratoires résonnants affectant l'arbre.

Sur la figure 2, le second mode de réalisation représenté peut favoriser le débattement axial de l'armature 10 par rapport au mode de réalisation précédent. En effet, la membrane souple 5A en matière élastomère de la liaison étanche 5 s'étend essentiellement dans la direction radiale. La matière élastomère s'étendant vers l'armature 10 depuis le cordon d'étanchéité statique 20 est surmoulée sur la face de la bride extérieure 11 du côté opposé au cordon 20, préférablement avec adhérence. Une couche 51 de matière élastomère est ainsi disposée sur la face de la bride 11 orientée vers l'ambiance extérieure E, et se prolonge radialement vers l'intérieur pour former la membrane souple 5A. L'armature 10 présente ici une section rectangulaire et est donc constituée uniquement par une portée radiale 10A.

Si la distance radiale entre la surface de l'arbre et le bord périphérique de l'ouverture du carter 3 est prévue importante, on peut prévoir une distance radiale (R4-R3) importante entre l'armature 10 et la bride 11, puisque l'étanchéité dans cet espace radial est assurée par la membrane souple 5A en élastomère. L'invention permet donc de concevoir des dispositifs de joints à bride extérieure de grand diamètre intérieur par rapport au diamètre de l'arbre, avec une proportion relativement importante de paroi d'étanchéité formée par de l'élastomère, d'où une économie substantielle de métal par rapport aux solutions classiques.

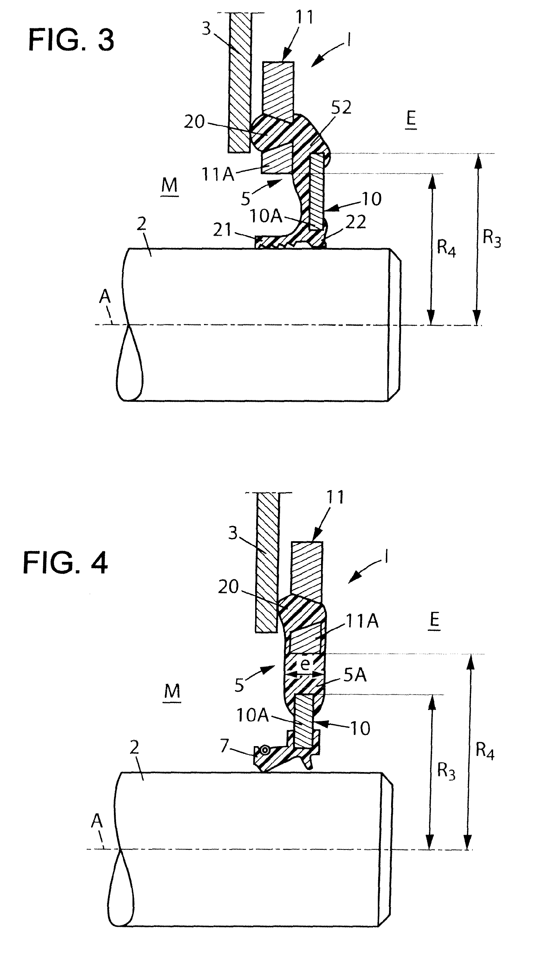

Sur la figure 3, le troisième mode de réalisation représenté diffère des deux premiers modes de réalisation tout d'abord en ce que le diamètre extérieur R3 de l'armature intérieure 10 est quelque peu supérieur au diamètre intérieur R4 de la bride extérieure 11. De ce fait, l'armature 10 chevauche quelque peu la bride 11 dans la direction radiale. Le décalage entre l'armature 10 et la bride 11 dans la direction axiale est prévu suffisant pour laisser un espace suffisant occupé par une couche 52 de matière élastomère entre ces deux pièces, cette couche 52 étant prévue suffisamment épaisse pour avoir une souplesse autorisant le débattement axial requis. La liaison étanche 5 en matière élastomère ne forme donc pas une membrane comme pour les deux premiers modes de réalisation.

Il s'ensuit qu'un dispositif de joint d'étanchéité selon ce troisième mode de réalisation n'autorisera généralement pas un aussi grand débattement radial ou axial en comparaison avec les deux premiers modes. Par ailleurs, dans cette réalisation, la même matière élastomère est utilisée pour le cordon d'étanchéité statique 20 et pour la lèvre d'étanchéité dynamique 21, l'ensemble étant réalisé lors d'une même opération de moulage. Il est entendu que cette méthode de réalisation de la lèvre d'étanchéité dynamique pourrait aussi s'appliquer aux autres modes de réalisation. Avantageusement, un caoutchouc acrylique de type ACM (élastomère de la famille des polyacrylates) peut être utilisé comme matière élastomère.

Sur la figure 4, un quatrième mode de réalisation concerne le cas où les portées radiales respectives de la bride extérieure et de l'armature intérieure sont disposées sensiblement au même niveau axial. La distance radiale séparant ces deux portées est égale à la différence entre le rayon intérieur R4 de la bride extérieure 11 et le rayon extérieur R3 de l'armature intérieure 10. L'extrémité radialement intérieure de la portée radiale 11A de la bride 11 est entièrement surmoulée par la matière élastomère qui s'étend radialement vers l'intérieur pour former la portion annulaire élastiquement déformable 5A de la liaison étanche 5 jusqu'à aller surmouler l'extrémité radialement extérieure de l'armature 10.

L'extrémité radialement intérieure de l'armature 10 est quant à elle surmoulée par une autre pièce en élastomère dans laquelle est formée de façon classique une lèvre d'étanchéité dynamique 7 assistée d'un ressort torique pour augmenter la pression de contact de la lèvre sur l'arbre. Comme évoqué précédemment, on pourrait alternativement former la lèvre d'étanchéité dynamique en prolongeant radialement vers l'intérieur la matière élastomère qui forme la liaison étanche 5, lors d'une opération de moulage qui utiliserait un même moule pour former en même temps le cordon d'étanchéité statique et la lèvre d'étanchéité dynamique.

La liaison étanche 5 en élastomère forme une membrane épaisse qui relie la bride 11 à l'armature 10. L'épaisseur axiale e de cette membrane est spécifique à l'application. Pour que la membrane présente la souplesse requise pour l'application, la hauteur de la membrane, c'est à dire la distance R4-R3, est typiquement supérieure à l'épaisseur axiale e d'un facteur compris entre 1,2 et 2, cette caractéristique n'étant toutefois pas indispensable.

S'il est prévu que le diamètre de l'arbre soit augmenté sans modifier le diamètre de l'ouverture du carter, il est encore possible d'utiliser un dispositif de joint d'étanchéité selon ce quatrième mode de réalisation, en augmentant les dimensions radiales des éléments. Il peut être nécessaire dans ce cas de prévoir que le cordon d'étanchéité statique soit radialement plus éloigné vers l'extérieur par rapport au bord de l'ouverture du carter.

Ces modes de réalisation présentent incontestablement des avantages notables par rapport à l'état de la technique. Outre l'amélioration de l'efficacité de la lèvre d'étanchéité dynamique, un dispositif de joint d'étanchéité selon l'invention permet une économie substantielle sur le coût de fabrication de la bride extérieure. En effet, on réalise tout d'abord une économie de matière notamment du fait que le diamètre intérieur de la bride extérieure peut être prévu plus grand que dans des dispositifs de joint d'étanchéité classiques, la membrane en élastomère assurant le lien entre la bride et l'armature intérieure. De plus, la bride peut être sensiblement plane et formée à partir d'une tôle usinée, ce qui évite un usinage complexe de plans inclinés comme il est souvent réalisé dans des dispositifs classiques.

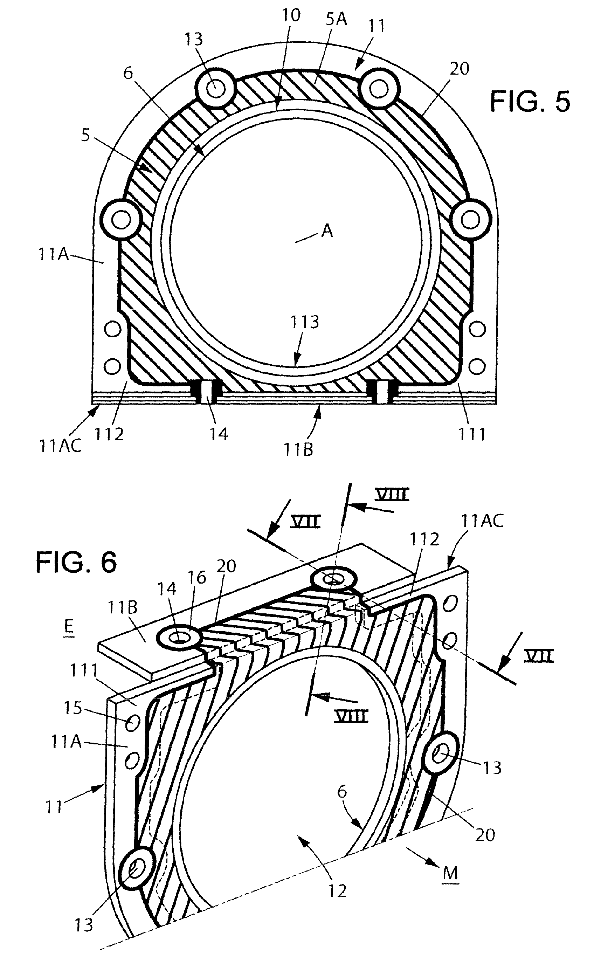

Sur la figure 5, un dispositif de joint d'étanchéité selon l'invention est représenté dans un mode de réalisation adapté pour un carter présentant plusieurs plans géométriques. Une configuration courante de carter consiste à effectuer un renvoi de paroi sensiblement perpendiculaire par rapport à la paroi dans laquelle est pratiquée l'ouverture de passage de l'arbre. Dans pareil cas, la partie inférieure du dispositif d'étanchéité doit être installée le long d'une zone en coin à angle droit, ce qui ne permet pas de réaliser la bride extérieure du dispositif d'étanchéité avec une seule plaque sensiblement plane.

Dans ce qui suit, les figures 5 et 6 sont commentées conjointement puisqu'elles représentent le même dispositif vu respectivement de face et en perspective. La matière élastomère qui s'étend depuis le cordon d'étanchéité statique 20 jusqu'à l'armature intérieure 10 recouvre partiellement une première plaque 11A en tôle usinée qui forme l'essentiel de la bride extérieure 11 du dispositif, sur la face qui comporte le cordon d'étanchéité statique. Ce dispositif correspond par exemple à l'un ou l'autre des deux modes de réalisation représentés respectivement sur les figures 1 et 4.

La première plaque 11 A présente une ouverture intérieure 12, et un bord extérieur ayant sensiblement la forme d'un demi cercle suivi par un côté droit 11 AC. Cette première plaque 11 A comprend des premiers trous 13 pour le passage d'éléments de fixation tels que des boulons. La plaque 11A n'est pas nécessairement fermée latéralement et peut former une collerette ouverte sur un côté comme sur la réalisation représentée. Ainsi, le côté droit 11AC de cette plaque comporte deux portions sensiblement symétriques 111 et 112 à bords rectilignes alignés séparés par l'ouverture latérale 113 de la collerette.

La bride extérieure 11 comprend en outre une seconde plaque 11 B adaptée pour s'appliquer sur le renvoi de paroi du carter. Cette seconde plaque a une forme allongée, ici sensiblement rectangulaire, et comprend des seconds trous 14 pour le passage d'éléments de fixation comme des boulons. Elle est disposée le long du côté droit 11AC de la première plaque 11A, en formant avec elle un angle sensiblement égal à 90°, c'est-à-dire correspondant à l'angle formé par le renvoi de la paroi du carter. Du fait de l'ouverture latérale 113 pratiquée dans la première plaque, il est nécessaire qu'une portion du cordon d'étanchéité statique 20 soit surmoulée sur la seconde plaque. Toutefois, selon un autre mode de réalisation non représenté, il est possible d'augmenter la distance entre le bord extérieur de l'ouverture intérieure 12 et le côté droit 11AC, afin d'avoir une première plaque 11A formant une collerette fermée.

Dans le mode de réalisation représenté, les moyens de fixation par serrage de chaque plaque 11A ou 11B sur le carter permettent de contrôler la compression du cordon d'étanchéité statique 20 entre chaque plaque et le carter, afin de réaliser une étanchéité efficace sans risquer de détériorer le cordon par une compression excessive. Préférablement, le cordon d'étanchéité statique 20 passe autour des trous de fixation 13 et 14 des première et seconde plaques et se dédouble localement pour encercler un insert 16 prévu dans chaque trou. Lors de l'opération de moulage du dispositif de joint d'étanchéité, les inserts 16 sont positionnés dans les trous de fixation 13 et 14 en prévoyant un certain espacement radial entre un insert et la paroi du trou, de façon à ce que la matière élastomère vienne remplir cet espace afin d'encercler chaque insert et le maintenir fixé à la plaque.

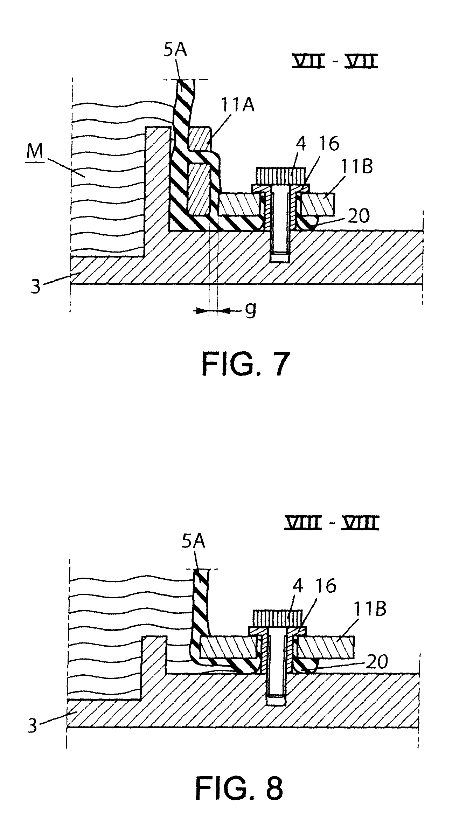

Dans le mode de réalisation représenté, la seconde plaque 11B est reliée à la première plaque 11A uniquement par de la matière élastomère. Lors de la fabrication, les deux plaques sont installées dans un moule avec leurs inserts, et un petit espacement g tel que représenté sur la figure 7 est prévu entre elles afin que la matière élastomère puisse traverser cet espacement améliorant ainsi la liaison entre les plaques. Il est entendu qu'on peut prévoir alternativement une seule plaque avec un renvoi d'angle à 90°, au lieu des deux plaques 11A et 11B.

La vue partielle en coupe de la figure 7 est réalisée selon un plan perpendiculaire à la seconde plaque 11B et passant par la ligne VII-VII représentée sur la figure 6. Ce plan de coupe passe donc par le centre d'un trou de fixation 14 et est en outre perpendiculaire à la première plaque 11A. Le cordon d'étanchéité statique 20 est moulé sur les première et seconde plaques 11A et 11B avec localement une forme en équerre, afin d'épouser la forme de la paroi du carter 3 dans la zone de renvoi d'angle. L'insert 16 est préférablement prévu pour venir en appui sur le carter 3 une fois le montage effectué, afin d'éviter une compression excessive du cordon d'étanchéité statique 20 au montage.

Sur la figure 8, la vue partielle en coupe du dispositif est réalisée selon un plan perpendiculaire à la seconde plaque 11B et passant par la ligne VIII-VIII représentée sur la figure 6. Ce plan passe par l'ouverture latérale 113 de la première plaque 11A, cette plaque n'apparaissant donc pas sur la vue en coupe. Il apparaît clairement que le cordon d'étanchéité statique 20 forme un bourrelet annulaire autour de l'insert 16 entre la seconde plaque 11B et le carter 3.

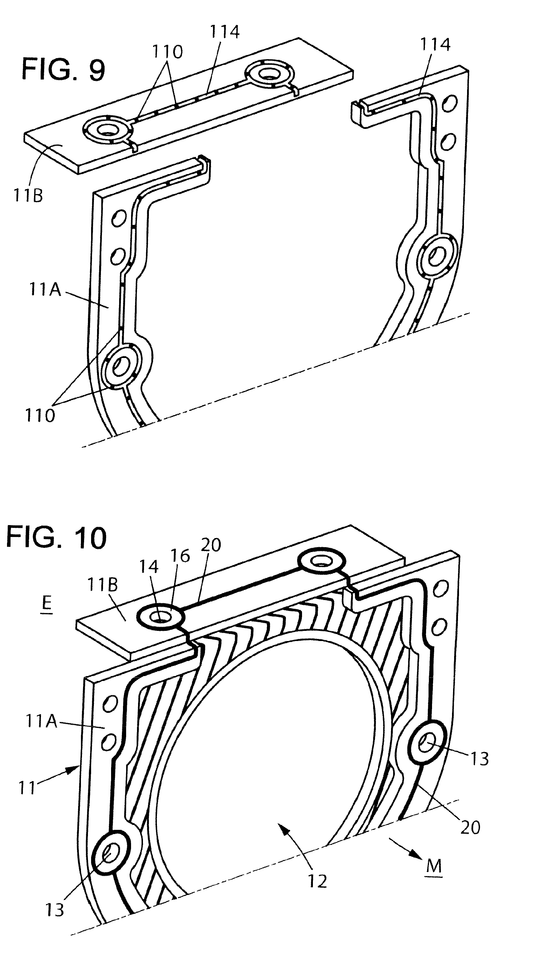

Sur la figure 9 sont représentées en perspective les première et seconde plaques 11A et 11B utilisées pour réaliser la bride extérieure 11 du dispositif de joint d'étanchéité selon le mode de réalisation représenté sur les figures 5 et 6. Les deux plaques 11A et 11B sont représentées avant leur montage dans un moule pour réaliser le cordon d'étanchéité statique avec la liaison étanche en matière élastomère qui relie la bride extérieure à l'armature intérieure. Sur chaque plaque 11A ou 11B sont réalisés des sillons 114 destinés à être remplis par l'élastomère lors de l'opération de moulage, pour former ainsi le cordon d'étanchéité statique. Une pluralité de trous 110 est prévue dans les sillons 114, débouchant sur l'autre face de la plaque, comme visible notamment sur les vues en coupe des figure 1 et 2. Ces trous servent à procurer un ancrage mécanique du cordon d'étanchéité statique, ou encore à permettre des passages de matière élastomère à travers chaque plaque lors du moulage pour établir des liens par continuité locale de matière entre le cordon d'étanchéité statique d'un côté d'une plaque et la liaison étanche de l'autre côté de la plaque, comme effectué par exemple dans les modes de réalisation correspondant respectivement aux figures 2 et 3.

Sur la figure 10, un dispositif de joint d'étanchéité selon l'invention est représenté dans un mode de réalisation alternatif à celui correspondant aux figures 5 et 6. Selon ce mode de réalisation, la liaison étanche en matière élastomère est réalisée de l'autre côté d'une plaque 11A ou 11B par rapport au cordon d'étanchéité statique, ce qui correspond par exemple au dispositif de la figure 2. Des première et seconde plaques 11A et 11B telles que représentées sur la figure 9 peuvent être utilisées pour réaliser le dispositif, et de même que pour le mode de réalisation correspondant aux figures 5 et 6, il n'est pas indispensable que le cordon d'étanchéité statique 20 adhère à la surface de la bride 11 du fait des passages de matière élastomère qui relient ce cordon à la liaison étanche de l'autre côté de la bride. On peut constater qu'il faut cependant que ladite liaison étanche adhère à la surface de la bride afin d'avoir une étanchéité statique au niveau de sa jonction avec la bride.

Il est entendu que les deux modes de réalisation correspondant respectivement aux figures 6 et 10 peuvent être combinés pour que la liaison étanche en matière élastomère recouvre la bride 11 des deux côtés, c'est à dire recouvre au moins en partie chaque plaque 11A ou 11B sur ses deux faces. Un tel mode de réalisation correspond par exemple au dispositif de la figure 4.

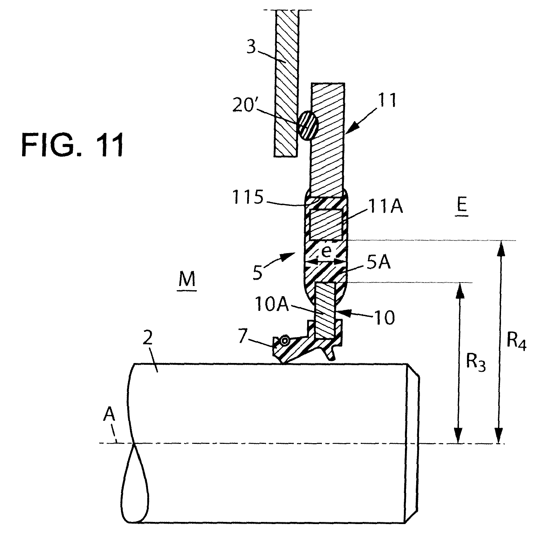

Dans un dispositif de joint d'étanchéité selon l'invention, la matière élastomère utilisée pour le cordon d'étanchéité statique n'est pas nécessairement la même que celle constituant la liaison étanche. De plus, le cordon d'étanchéité statique n'est pas nécessairement moulé sur la bride extérieure. Un cinquième mode de réalisation représenté sur la figure 11 utilise un cordon d'étanchéité statique 20' qui est installé sur la bride extérieure 11 juste avant le montage, dans un sillon de la bride prévu à cet effet. Les autres parties du dispositif reprennent les caractéristiques du mode de réalisation correspondant au dispositif de la figure 4. Avantageusement, des trous 115 prévus dans l'épaisseur de la portée radiale 11A de la bride 11 sont occupés par l'élastomère moulé sur la bride de façon à procurer un ancrage de l'élastomère sur la bride.

Outre les avantages mécaniques mentionnés précédemment tels que le centrage permanent et la meilleure tenue vibratoire, ou encore les avantages ergonomiques procurés par la souplesse de la membrane en élastomère tels qu'une meilleure adaptabilité aux différentes géométries de carters moteurs, on a vu qu'un dispositif de joint d'étanchéité dynamique selon l'invention est plus facile et plus économique à produire en comparaison avec la plupart des conceptions classiques et notamment par rapport au dispositif de joint selon EP 0 615 084 A1 qui nécessite plus de matière.

En particulier, la bride extérieure peut être fabriquée à partir d'une ou deux plaques métalliques, et une seule opération de moulage est nécessaire : la ou les plaques de la bride extérieure sont agencées dans un moule avec l'armature intérieure et des éléments tels que des inserts, des écrous, ou encore des logements par exemple pour un élément codeur ou un capteur de rotation. L'élastomère est injecté dans le moule pour former le cordon d'étanchéité statique et éventuellement aussi la lèvre d'étanchéité dynamique, et sert de liant entre les divers éléments.

En comparaison, dans le dispositif de joint selon EP 0 615 084 A1, la forme de la bride extérieure rend difficile sa fabrication à partir de plaque(s) métalliques, et cette bride est généralement moulée par injection. Deux opération de moulage sont a priori nécessaires, puisque le positionnement de l'armature dans la bride et le moulage de l'élastomère doivent être réalisés une fois que la bride a été formée par un premier moulage.

L'économie substantielle réalisée par la fabrication simplifiée de la bride extérieure s'ajoute à l'économie qui peut être réalisée par la standardisation de l'armature intérieure et éventuellement de la lèvre d'étanchéité dynamique pour un diamètre d'arbre moteur considéré. En effet, il est courant que des arbres de même diamètre soient montés dans des carters moteurs de différentes géométries. Ainsi, seule la bride extérieure est spécifique au carter moteur. Du fait que les configurations de carters moteurs sont bien plus nombreuses que les standards de diamètres d'arbres moteurs, la fabrication économique de la bride extérieure dans le dispositif de joint d'étanchéité dynamique selon l'invention permet de réaliser une économie globale sur la production d'une gamme de joints d'étanchéité dynamique pour différents ensembles moteurs.

## Revendications

1. Dispositif de joint d'étanchéité dynamique (1) pour arbre rotatif (2), en particulier pour arbre rotatif d'un moteur thermique comportant un carter d'huile, comprenant une bride extérieure (11) destinée à être montée sur un carter (3) et sur laquelle est prévu un cordon d'étanchéité statique (20, 20') en matière élastomère pour assurer l'étanchéité entre la bride et le carter, de la matière élastomère étant moulée sur ladite bride extérieure (11) et s'étendant jusqu'à une armature intérieure (10) sensiblement circulaire pour constituer une liaison étanche (5) entre la bride extérieure (11) et cette armature, ladite armature (10) étant surmoulée au moins en partie par la matière élastomère et supportant une lèvre d'étanchéité dynamique (6, 7, 21) destinée à venir en contact avec l'arbre (2), **caractérisé en ce que** ladite liaison étanche (5) en matière élastomère comporte au moins une portion annulaire (5A ; 52) élastiquement déformable et libre de mouvement pour permettre un débattement radial et axial de l'armature par rapport à la bride.

2. Dispositif de joint d'étanchéité selon la revendication 1, dans lequel le cordon d'étanchéité statique (20) est moulé sur la bride extérieure (11), et dans lequel la matière élastomère dudit cordon (20) est la même que celle constituant ladite liaison étanche (5).

3. Dispositif de joint d'étanchéité selon la revendication 2, dans lequel une couche (51, 52) de matière élastomère est disposée sur la face de la bride extérieure (11) opposée au milieu à étanchéifier (M), plusieurs trous (110) étant prévus dans ladite bride (11) pour établir des zones de passage de matière élastomère reliant ladite couche (51, 52) au cordon d'étanchéité statique (20).

4. Dispositif de joint d'étanchéité selon l'une des revendications 1 à 3, dans lequel l'armature intérieure (10) présente un diamètre extérieur (R3) qui est inférieur au diamètre intérieur (R4) de la bride extérieure (11).

5. Dispositif de joint d'étanchéité selon la revendication 4, dans lequel ladite portion annulaire (5A) de ladite liaison étanche (5) forme une membrane qui s'étend essentiellement dans un plan perpendiculaire à l'axe (A) du dispositif.

6. Dispositif de joint d'étanchéité selon l'une des revendications 1 à 5, dans lequel la bride extérieure (11) présente une première portée radiale (11A) et l'armature intérieure (10) présente une seconde portée radiale (10A) axialement décalée en direction de l'ambiance extérieure (E), et dans lequel ladite portion annulaire (5A ; 52) de ladite liaison étanche (5) relie élastiquement les deux portées radiales (10A, 11A).

7. Dispositif de joint d'étanchéité selon la revendication 5, dans lequel la bride extérieure (11) présente une première portée radiale (11A) et l'armature intérieure (10) présente une seconde portée radiale (10A) disposée sensiblement au même niveau axial que la première portée radiale (11A) et radialement séparée de celle ci d'une certaine distance (R4-R3), et dans lequel ladite portion annulaire (5A) formant une membrane relie élastiquement les deux portées radiales (10A, 11A).

8. Dispositif de joint d'étanchéité selon l'une des revendications 6 et 7, dans lequel la portée radiale (10A) de l'armature intérieure présente une face orientée en direction du milieu à étanchéifier (M) qui est entièrement surmoulée par la matière élastomère, et dans lequel la matière élastomère est prolongée radialement en direction de l'arbre pour former la lèvre d'étanchéité dynamique (21).

9. Dispositif de joint d'étanchéité selon l'une des revendications 1 à 8, dans lequel la bride extérieure (11) est essentiellement formée par une plaque (11A) métallique.

10. Dispositif de joint d'étanchéité selon l'une des revendications 1 à 9, dans lequel la bride extérieure (11) comprend une première plaque (11A) présentant une ouverture intérieure (12) et un côté droit (11AC), ladite première plaque (11A) comprenant des premiers trous (13) pour le passage d'éléments de fixation tels que des boulons, la bride extérieure (11) comprenant en outre une seconde plaque (11B) de forme allongée qui comprend des seconds trous (14) pour le passage d'éléments de fixation, ladite seconde plaque (11B) étant disposée le long du côté droit (11AC) de la première plaque (11A) en formant avec elle un angle sensiblement égal à 90°, et dans lequel une portion du cordon d'étanchéité statique (20) est moulée sur ladite seconde plaque (11 B).

11. Dispositif de joint d'étanchéité selon la revendication 10, dans lequel la seconde plaque (11B) est reliée à la première plaque (11A) uniquement par de la matière élastomère.

12. Dispositif de joint d'étanchéité selon l'une des revendications 10 et 11, dans lequel la première plaque (11A) forme une collerette ouverte, le côté droit (11AC) de la première plaque (11A) comportant deux portions sensiblement symétriques (111, 112) à bords rectilignes alignés séparées par une ouverture latérale (113).

13. Dispositif de joint d'étanchéité selon l'une des revendications 1 à 12, dans lequel la bride extérieure (11) comprend plusieurs trous (13, 14) comportant chacun un insert (16) pour le passage d'un boulon de fixation (4) de ladite bride (11) au carter (3), et dans lequel le cordon d'étanchéité statique (20, 20') prévu sur la bride est localement dédoublé pour encercler chaque insert (16), de la matière élastomère étant moulée entre la bride (11) et une surface périphérique d'un insert (16) de façon à maintenir l'insert fixé à la bride.
